# EUROPEAN PATENT SPECIFICATION

(11) **EP 2 806 690 B1**
(45) Date of publication and mention of the grant of the patent: **27.03.2019**
(21) Application number: 12866082.6
(22) Date of filing: 21.12.2012
(51) Int. Cl.: H04W 36/00

(54) **BASE STATION, COMMUNICATION SYSTEM, COMMUNICATION METHOD, AND PROGRAM RECORDING MEDIUM**
BASISSTATION, KOMMUNIKATIONSSYSTEM, KOMMUNIKATIONSVERFAHREN UND PROGRAMMAUFZEICHNUNGSMEDIUM
STATION DE BASE, SYSTÈME DE COMMUNICATION, PROCÉDÉ DE COMMUNICATION ET SUPPORT D'ENREGISTREMENT DE PROGRAMME

(30) Priority: 16.01.2012 JP 2012006324
(43) Date of publication of application: 26.11.2014
(73) Proprietor: NEC Corporation, Tokyo 108-8001 (JP)
(72) Inventor: KUBOTA, Mitsuhiro, Tokyo 108-8001 (JP); HAYASHI, Sadafuku, Tokyo 108-8001 (JP); MATSUNAGA, Yasuhiko, Tokyo 108-8001 (JP)
(74) Representative: MacDougall, Alan John Shaw
(86) International application number: PCT/JP2012/008209
(87) International publication number: WO 2013/108346

(56) References cited:
- EP-A1- 2 224 770
- WO-A1-2006/101426
- WO-A1-2006/101426
- WO-A1-2008/039124
- WO-A1-2011/061990
- WO-A2-2010/078270
- JP-A- 2008 177 787
- JP-A- 2009 272 884
- JP-A- 2012 010 305
- "3rd Generation Partnership Project; Technical Specification Group Radio Access Network; Evolved Universal Terrestrial Radio Access Network (E-UTRAN); X2 application protocol (X2AP) (Release 10)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.4.0, 19 December 2011 (2011-12-19), pages 1-132, XP050554670, [retrieved on 2011-12-19]
- '3rd Generation Partnership Project; Technical Specification Group Radio Access Network; Evolved Universal Terrestrial Radio Access Network (E-UTRAN);X2 application protocol (X2AP) (Release 10)' 3GPP TS 36.423 V10.4.0 December 2011, pages 20 - 24, 35-39, XP050554670

## Description

### [Technical Field]

The present invention relates to a base station, a communication system including a base station, communication method and recording medium for recording a program.

### [Background Art]

A relay base station of a mobile network defined in 3GPP (3rd Generation Partnership Project) is connected with a base station via a Un link and constitutes a cell. The base station containing the relay base station is referred to as a Donor eNodeB (DeNB). The DeNB transfers data between a core network and the relay base station. The transfer data is sent via an S11 link.

In general, a mobile network has been constituted mainly by macro base stations. Because the macro base stations each can cover a wide area, the number of base stations to be installed by a telecommunications carrier has been small. However, with the increase in the number of mobile terminals frequently connected with the internet such as smart phones, the necessity for installing a large number of base stations has arisen.

As a result, there has been increase in the number of telecommunications carriers who consider installation of a pico base station or a relay base station having a smaller coverage area, in addition to the macro base stations. Accordingly, the number of cells neighboring to a certain cell increases, and resultantly, manual creation of a neighbor cell list has become difficult.

The neighbor cell list is a list which is referred to at a time of determining a cell to be a movement destination for a mobile terminal present in the current cell when the mobile terminal is in the idle state. That is, the neighbor cell list with respect to a certain cell is a list of cells neighboring to the certain cell. The neighbor cell list is referred to also at a time of a base station's determining a target cell for handover when a mobile terminal present in its cell is in the RRC (Radio Resource Control) Connected state. In general, the neighbor cell list is notified within the cell by the base station.

As a technology for setting a neighbor cell list, for example, Non-patent Document 1 describes that a certain base station receives information relevant to a neighbor cell list from another base station.

Further, as a document describing a related technology, Patent Document 1 and Patent Document 2 are mentioned.

Patent Document 1 discloses a maintenance server and an optimization terminal, where the former collects information from each base station and sends it to the latter, and then the latter optimizes a neighbor cell list on the basis of the received information.

Patent Document 2 discloses a technology related to optimization of a neighbor cell list at a time of installing a new base station. First, the newly installed base station sends a notification to neighbor base stations thereof. Each of the base stations having received the notification sends back a response if its distance from the newly installed base station is equal to or smaller than a threshold value. The newly installed base station receives the responses and then creates an optimum neighbor cell list by listing the neighbor base stations in the order of closeness in distance.

3rd Generation Partnership Project; Technical Specification Group Radio Access Network; Evolved Universal Terrestrial Radio Access Network (E-UTRAN); X2 Application Protocol (X2AP) (Release 10), 3GPP TS. 36.423 V10.4.0 discloses the radio network layer signalling procedures of the control plane between eNBs in E-UTRAN. X2AP supports the functions of X2 interface by signalling procedures defined therein.

### [Citation List]

### [Patent Literature]

[Patent Document 1]: Japanese Patent Application Laid-Open No. 2008-153963.
[Patent Document 2]: Japanese Patent Application Laid-Open No. 2011-004101.

### [Non Patent Literature]

[Non-patent Document 1]: 3GPP TS36.423 (V10.3.0), "Evolved Universal Terrestrial Radio Access Network (E-UTRAN); X2 application protocol (X2AP)", September 2011.

### [Summary of Invention]

### [Technical Problem]

Now considered is a case where a certain cell A receives a neighbor cell list from another cell B using the technology described in Non-patent Document 1. The cell A is a cell managed by a base station A connected to a core network A. In this case, there is a possibility that a neighbor cell list with respect to the cell B includes even a cell managed by a base station connected to a core network other than the core network A.

Accordingly, it may occur that a mobile terminal attempting handover from the cell A performs the handover to a cell managed by a base station connected to a core network other than the core network A. In such a case, the time necessary for the handover process becomes longer than that for handover between cells belonging to the same core network.

The objective of the present invention is to provide a base station, a communication system, a communication method, and a recording medium for recording a program, all of which can solve the problem described above.

### [Solution to Problem]

The invention is set out in the appended set of claims. The embodiments and/or examples of the following description which are not covered by the appended claims are considered as not being part of the present invention. A base station according to the present invention comprises: a storage means for storing a list of cells neighboring to a cell managed by the base station the list correlating each of the neighbor cells with an identifier for identifying a core network the neighboring cell belongs to; a reception means for receiving, from a base station neighboring to the own base station, a list stored by the neighboring base station; and a control means for using the received list as a list with respect to the cell managed by the own base station, wherein the identifier is one of a core network ID, a Mobility Management Entity (MME) ID, a Global Unique MME ID (GUMMEI) and a Serving Gateway (S-GW) ID.

A communication system according to the present invention comprises a plurality of base stations, wherein the base stations each comprise: a storage means for storing a list of cells neighboring to a cell managed by the base station, the list correlating each of the neighbor cells with an identifier for identifying a core network the neighbor cell belongs to; a reception means for receiving, from a base station neighboring to the own base station, a list stored by the neighboring base station; and a control means for using the received list as a list with respect to the cell managed by the own base station, wherein the identifier is one of a core network ID, a Mobility Management Entity (MME) ID, a Global Unique MME ID (GUMMEI) and a Serving Gateway (S-GW) ID.

A communication method according to the present invention is comprises: receiving a cell list stored in a neighbor base station, in which cells neighboring to the cell managed by the neighbor base station are each correlated with an identifier for identifying a core network the neighbor cell belongs to; and using the received list as a list with respect to a cell managed by the own base station, wherein the identifier is one of a core network ID, a Mobility Management Entity (MME) ID, a Global Unique MME ID (GUMMEI) and a Serving Gateway (S-GW) ID.

A recording medium storing a program for causing a computer to execute: a process of receiving a cell list, stored by a neighbor base station, in which cells neighboring to a cell managed by the neighbor base station are each correlated with an identifier for identifying a core network the neighbor cell belongs to; and a process of using the received list as a list with respect to a cell managed by the own base station, wherein the identifier is one of a core network ID, a Mobility Management Entity (MME) ID, a Global Unique MME ID (GUMMEI) and a Serving Gateway (S-GW) ID.

### [Advantageous Effects of Invention]

It becomes possible to recognize to which core network each cell included in a neighbor cell list belongs.

### [Brief Description of Drawings]

[Fig. 1] A diagram showing a configuration according to a first exemplary embodiment.
[Fig. 2] A diagram showing an example of a list according to the first exemplary embodiment.
[Fig. 3] A flow chart showing operation according to the first exemplary embodiment.
[Fig. 4] A diagram showing a configuration of a system according to a second exemplary embodiment.
[Fig. 5] A diagram showing a configuration of a base station according to the second exemplary embodiment.
[Fig. 6] A diagram showing an example of a neighbor cell list according to the second exemplary embodiment.
[Fig. 7] A flow chart showing operation according to the second exemplary embodiment.
[Fig. 8] A flow chart showing operation according to the second exemplary embodiment.
[Fig. 9] A sequence diagram showing operation according to the second exemplary embodiment.
[Fig. 10] A sequence diagram showing operation according to the second exemplary embodiment.
[Fig. 11] A diagram showing a configuration of a system according to a third exemplary embodiment.
[Fig. 12] A diagram showing an example of statistical information according to the third exemplary embodiment.
[Fig. 13] A diagram showing an example of information sent from a base station to a pico base station in the second exemplary embodiment.
[Fig. 14A] A diagram showing an example of information sent from a base station to a pico base station in the second exemplary embodiment.
[Fig. 14B] A diagram showing an example of information sent from a base station to a pico base station in the second exemplary embodiment.
[Fig. 15] A diagram showing an example of information sent from a base station to a pico base station in the second exemplary embodiment.
[Fig. 16A] A diagram showing an example of information sent from a base station to a pico base station in the second exemplary embodiment.
[Fig. 16B] A diagram showing an example of information sent from a base station to a pico base station in the second exemplary embodiment.
[Fig. 17A] A diagram showing an example of information sent from a base station to a pico base station in the second exemplary embodiment.
[Fig. 17B] A diagram showing an example of information sent from a base station to a pico base station in the second exemplary embodiment.
[Fig. 18] A diagram showing an example of information sent from a base station to a pico base station in the second exemplary embodiment.
[Fig. 19A] A diagram showing an example of information sent from a base station to a pico base station in the second exemplary embodiment.
[Fig. 19B] A diagram showing an example of information sent from a base station to a pico base station in the second exemplary embodiment.
[Fig. 20A] A diagram showing an example of information sent from a base station to a pico base station in the second exemplary embodiment.
[Fig. 20B] A diagram showing an example of information sent from a base station to a pico base station in the second exemplary embodiment.

### [Description of Embodiments]

Hereinafter, exemplary embodiments of the present invention will be described with reference to drawings.

### [First exemplary embodiment]

### [Configuration]

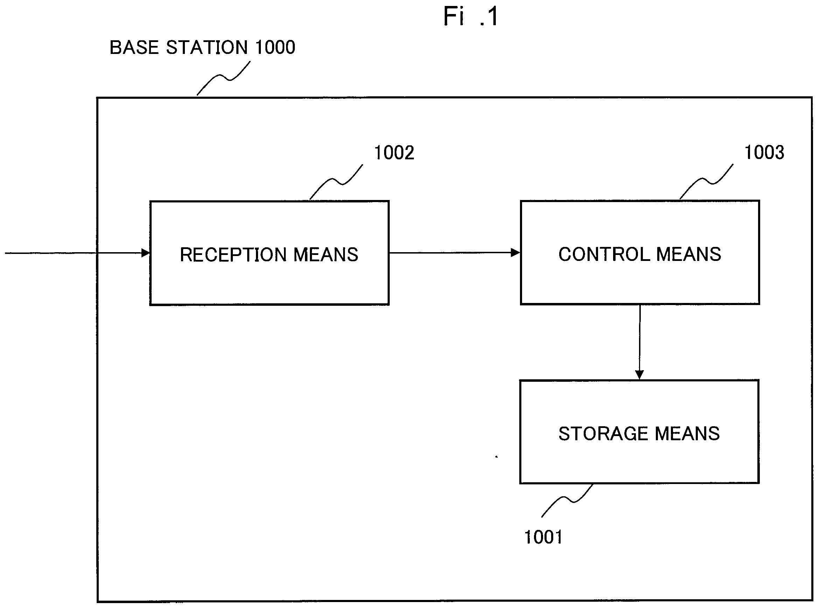

Fig. 1 is a diagram showing an example of a configuration of a base station 1000 according to a first exemplary embodiment of the present invention. According to Fig. 1, the base station 1000 includes a storage means 1001, a reception means 1002 and a control means 1003. The base station 1000 manages a cell.

The storage means 1001 stores a list of cells (not illustrated in the diagram) neighboring to the base station 1000. The reception means 1002 receives from a neighbor base station a list stored by the neighbor base station. The control means 1003 uses the received list as a list with respect to the cell managed by the base station 1000.

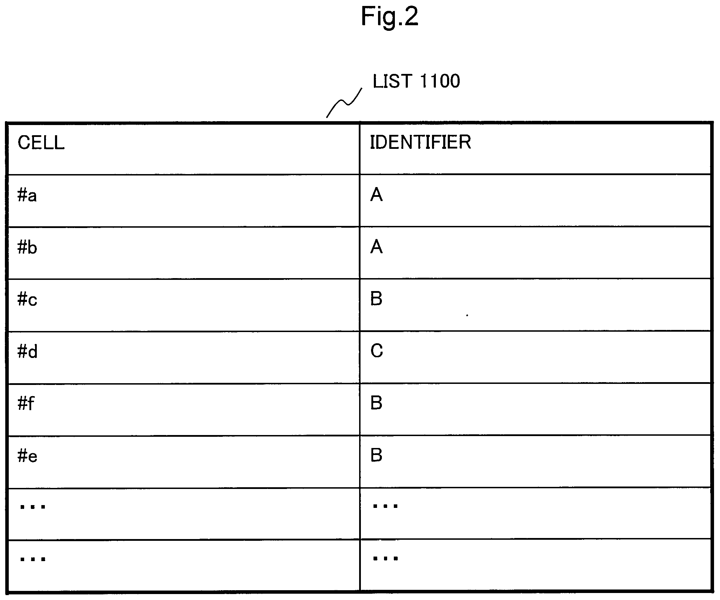

Fig. 2 is a diagram showing an example of a list 1100 which is stored by the storage means 1001. The list 1100 stores the neighbor cells in a manner to correlate each of them with an identifier for identifying a core network the neighbor cell belongs to. In Fig. 2, it is shown, for example, that the cell #a belongs to a core network identified by an identifier "A".

### [Operation]

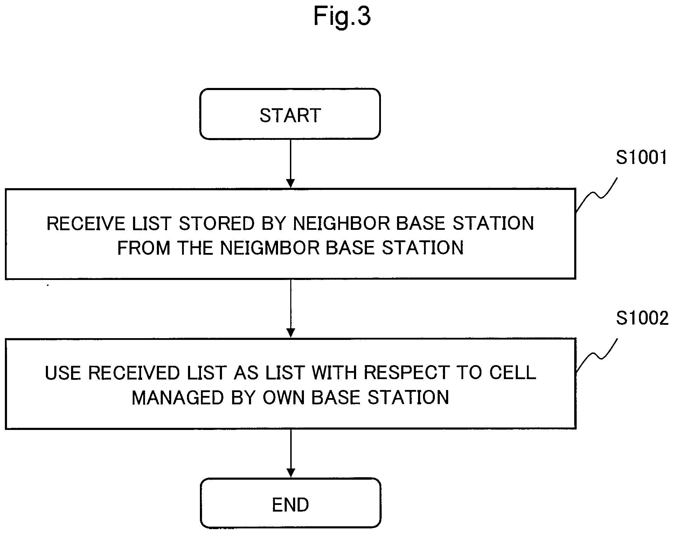

Fig. 3 is a flow chart showing a flow of operation according to the first exemplary embodiment.

First, the reception means 1002 receives from a neighbor base station a list stored by the neighbor base station (S1001).

Then, the control means 1003 uses the received list as a list with respect to the cell managed by the base station 1000 (S1002).

### [Effect]

As has been described above, the base station 1000 according to the first exemplary embodiment uses a list stored by a neighbor base station as a list with respect to the cell managed by the base station 1000. The list stores, for each of the cells, an identifier for identifying a core network the cell belongs to.

As a result, it becomes possible to recognize to which core network each of the cells described in the list belongs.

### [Second exemplary embodiment]

### [System configuration]

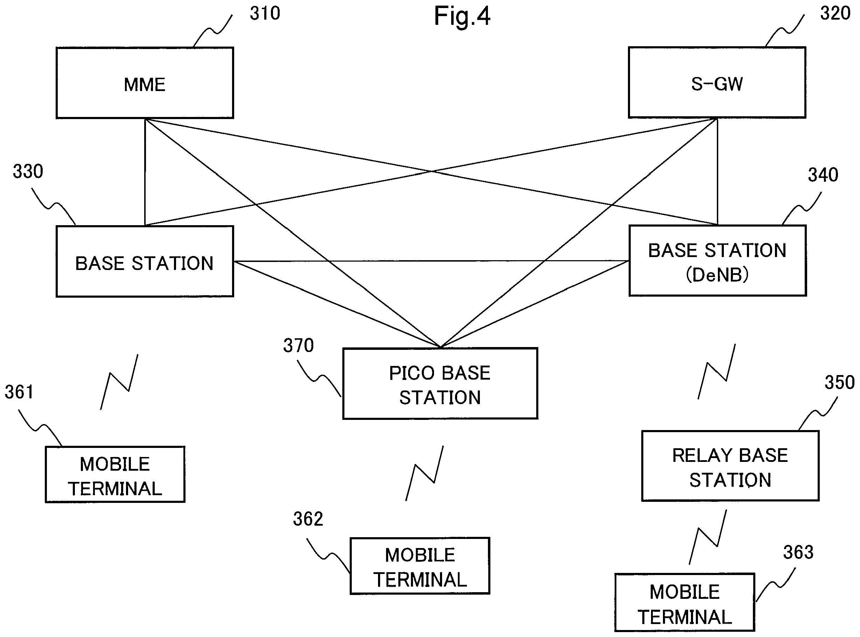

Fig. 4 is a diagram showing an example of a configuration of a communication system according to a second exemplary embodiment. According to Fig. 4, the communication system according to the second exemplary embodiment includes an MME (Mobility Management Entity) 310, an S-GW (Saving-Gateway) 320, a base station 330 and a base station 340. The communication system further includes a relay base station 350, a mobile terminal 361, a mobile terminal 362, and a mobile terminal 363.

The base stations 330 and 340 and a pico base station 370 are connected with the MME 310 and the S-GW 320 via a network. Hereafter, these base stations are each referred to simply as a base station when they are not particularly distinguished from each other. Similarly, the mobile terminals 361, 362 and 363 are each referred to simply as a mobile terminal when they are not particularly distinguished from each other.

In the example shown in Fig. 4, there are three mobile terminals which are connected to, respectively, the base station 330, the relay base station 350 and the pico base station 370.

While the communication system shown in Fig. 4 may be constituted by any type of network, the following description will be given by taking a network using LTE (Long Term Evolution) as an example.

First, the MME 310 has a function to send and receive control signals to and from the base stations via an S1-MME link.

The S-GW 320 has a function to send and receive user data to and from the base stations via an S1-U link.

Each of the base stations manages a cell. The base stations may include a relay base station. In Fig. 4, the base station 340 accommodates the relay base station 350. The base station 340 accommodating the relay base station 350 is referred to also as a DeNB, as described above. Connections between the base stations are made via an X2 link.

Here, the pico base station 370 has the same function as that of the base station 330, but transmission power and coverage area of the pico base station are both smaller than that of the base station 330.

The base station 340 and the relay base station 350 are connected with each other via a Un link. The base station 340 has a function to transfer data between the relay base station 350, and both of the MME 310 and the S-GW 320. Data transfer between the relay base station 350, and both of the MME 310 and the S-GW 320 is made via an S11 link.

The devices shown in Fig. 4 have a large number of functions in addition to those described above, but description of their detail functions will be omitted here.

### [Configuration of base station]

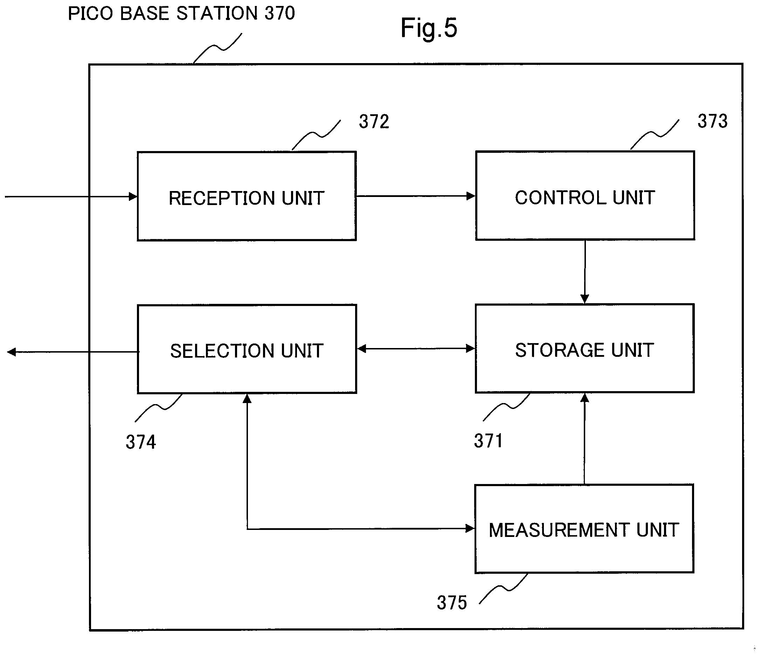

Next, a configuration of the base station will be described using Fig. 5. Fig. 5 shows an example of a configuration of the pico base station 370. Here, the configuration of Fig. 5 may be applied not only to the pico base station 370 but also similarly to the other base stations; that is, the base stations 330 and 340 and the relay base station 350.

Hereafter, a configuration and operation of the second exemplary embodiment will be described by taking the pico base station 370 as an example, unless otherwise mentioned. As described just above, the configuration and operation of the second exemplary embodiment described below are not limited only for the pico base station 370 but may be applied also to the base stations 330 and 340 and the relay base station 350. The pico base station 370 may manage a plurality of cells. However, for the sake of simplicity, the following description will be given assuming that the pico base station 370 manages only one single cell.

According to Fig. 5, the pico base station 370 includes a storage unit 371, a reception unit 372, a control unit 373, a selection unit 374 and a measurement unit 375.

The storage unit 371 stores a list of cells neighboring to the cell managed by the pico base station 370. The neighbor cell list is a list showing cells to be candidates for a target cell of handover from the pico base station 370, as described above. The neighbor cell list stored by the storage unit 371 will be described later in detail.

The reception unit 372 receives a neighbor cell list held by a base station neighboring to the cell managed by the pico base station 370.

The control unit 373 uses the neighbor cell list of the other base station received by the reception unit 372 as a neighbor cell list with respect to the cell managed by the pico base station 370.

The selection unit 374 selects a base station from which a neighbor cell list is to be received, on the basis of cell states of respective neighbor base stations. The selection unit 374 receives the cell states of neighbor base stations from the neighbor cell list stored in the storage unit 371 or from the measurement unit 375.

The measurement unit 375 measures information on neighbor cells in terms of their handover frequencies, handover failure rates and the like, and outputs the information to the selection unit 374 or the storage unit 371.

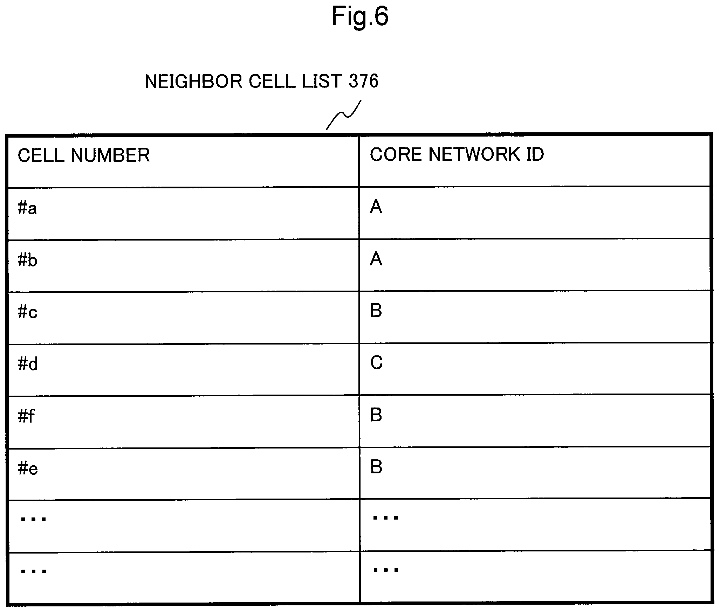

Fig. 6 is a diagram showing an example of a neighbor cell list 376 stored by the storage unit 371. In Fig. 6, cells #a, #b, #c, #d, #f and #e are listed as neighbor cells. Further in Fig. 6, to each of the cells, correlated is the identifier (core network ID) of a core network the cell belongs to. For example, the cell #a belongs to a core network identified by the identifier "A". Saying more precisely, that the core network ID "A" is correlated to the cell #a indicates that a base station managing the cell #a belongs to a core network identified by the identifier "A". It can be considered to use, as the core network identifier, a core network ID (hereafter, referred to as CN-ID), a MME ID, a GUMMEI (Globally Unique MME ID), an S-GW ID or the like, for example. The core network identifier may be any one which enables identifying to which core network a base station is connected.

Hereafter, to simplify the description, it is assumed that a CN-ID is used as the identifier for identifying a core network in the neighbor cell list 376. Although only a CN-ID is correlated to each cell in Fig. 6, other information may also be correlated to each cell. For example, the handover frequency, handover success rate, handover failure rate, reception quality and the like for each cell may be stored in a manner to be correlated with the cell.

### [Operation]

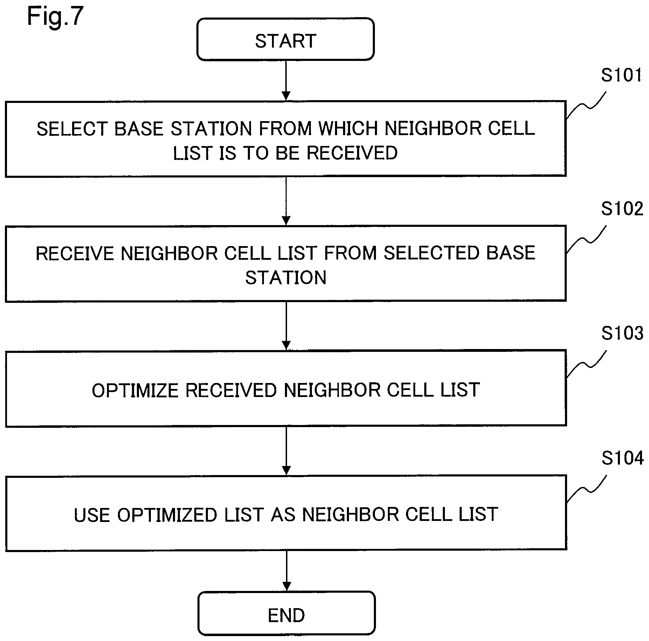

Hereinafter, a description will be given of operation according to the second exemplary embodiment, taking the pico base station 370 as an example, with reference to Fig. 7. Fig. 7 is a flow chart showing operation of the pico base station 370.

First, the selection unit 374 selects another base station from which a neighbor cell list is to be received (S101). Here, the selection unit 374 selects the base station 330 as the base station from which a neighbor cell list is to be received. The selection unit 374 requests the selected base station 330 to send a neighbor cell list.

For the request for sending a neighbor cell list made from the pico base station 370 to the base station 330, a dedicated message may be used. Alternatively, a message which is not a dedicated one but one described in Non-patent Document 1 such as "X2 SETUP REQUEST" or "eNB CONFIGURATION UPDATE" may be used. The pico base station 370 may directly request the base station 330 to send a neighbor cell list, and also may indirectly make the request via the MME 310 or the like.

Next, the reception unit 372 receives a neighbor cell list from the selected base station (S102). In S102, a dedicated message may be used for the sending of a neighbor cell list from the selected base station 330 to the pico base station 370. Alternatively, a message which is not a dedicated one but one described in Non-patent Document 1 such as "X2 SETUP RESPONSE" or "eNB CONFIGURATION UPDATE" may be used.

A method of sending and receiving of a neighbor cell list between the base stations in S101 and S102 will be described later in detail.

When the reception unit 372 has received a neighbor cell list in S102, the pico base station 370 performs operation shown as S103. The control unit 373 optimizes the received neighbor cell list (SI03). This optimization also will be described later in detail.

Finally, the control unit 373 uses the optimized neighbor cell list as a neighbor cell list with respect to the cell managed by the pico base station 370 (S104).

The above description has been given of an operation flow shown in Fig. 7 in which S104 is executed after S103. However, use of the neighbor cell list received in S102 as a neighbor cell list of the own base station may be started without optimization, that is, without executing S103. In that case, the optimization process shown as S103 may be performed after S104 periodically or with certain timing.

The optimization shown as S103 may also be that of simply eliminating from the neighbor cell list 376 the information on the cell of the base station having sent the neighbor cell list 376 and on the cell of the pico base station 370. First, it is assumed that the reception unit 372 of the pico base station 370 received a neighbor cell list with respect to the cell #b from the base station 330. At that time, the cell #b is not described as a candidate for a target cell for handover in the neighbor cell list received from the base station 330. Therefore, the control unit 373 of the pico base station 370 firstly adds the cell #b to, and eliminates the cell managed by the pico base station 370 from, the received neighbor cell list. The pico base station 370 uses thus created neighbor cell list as the neighbor cell list 376 with respect to the cell managed by the pico base station 370.

### [Optimization of received neighbor cell list]

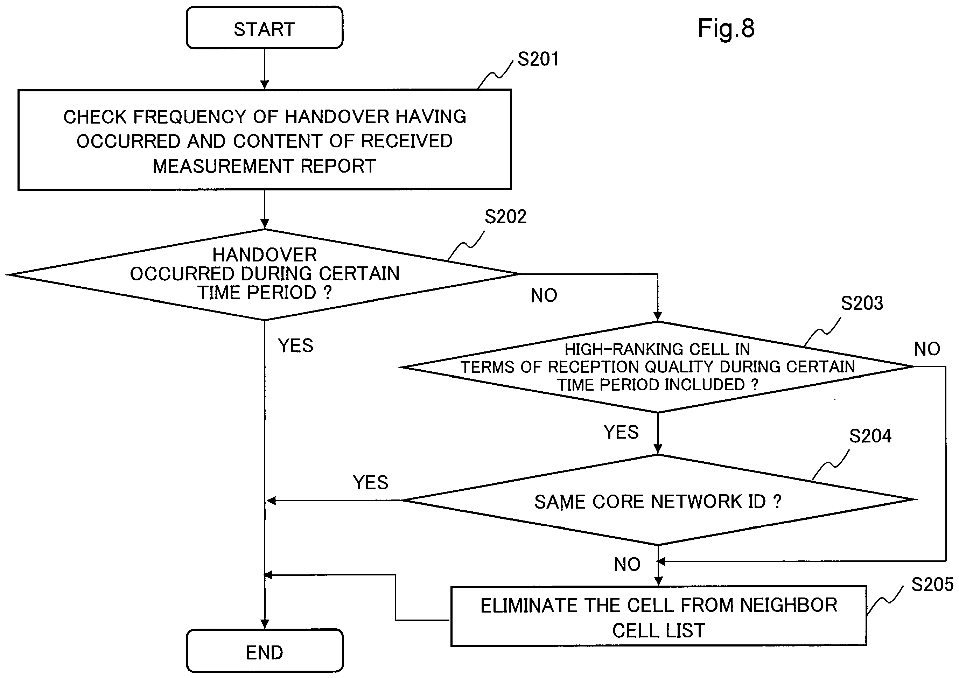

Hereinafter, a description will be given of optimization of a received neighbor cell list, with reference to a flow chart shown in Fig. 8.

Here, the content of operation described below corresponds to S103 of Fig. 7. However, the operation described below may be performed, after the series of operation up to S104 is finished, in a case the neighbor cell list 376 is to be optimized periodically or with certain timing.

For convenience of explanation, the following description will be given by assuming a target cell of the current process to be a "cell A".

First, the control unit 373 checks the frequency of handover to each neighbor cell having occurred from the cell under its management. Concurrently, the control unit 373 checks the content of a measurement report received from a mobile terminal (S201).

Here, the measurement report is referred to as a report on the communication quality of cells around the mobile terminal, which is sent from the mobile terminal to the base station. More specifically, the mobile terminal measures the communication quality in neighbor cells of the cell within which it is currently performing communication and, referring to a determination condition, determines if the measured communication quality satisfies predetermined communication quality. In that case, the mobile terminal sends a measurement report expressing the determination result to the base station. Receiving the measurement report, the base station determines, according to the content of the report, that handover should be performed with respect to the mobile terminal from the cell within which the mobile terminal is currently performing communication to another cell of better communication quality.

Next, the control unit 373 determines whether or not handover to the cell A contained in the neighbor cell list 376 has occurred during a predetermined time period. (S202). If handover to the cell A has occurred during the predetermined time period, the process on the cell A is ended.

After that, if the optimization process has not been performed yet on any cell in the neighbor cell list 376, the control unit 373 may repeat the series of operation from S201 again.

If the determination in S202 turns out to be that no handover to the cell A has occurred during the predetermined time period, operation shown as S203 is executed. The control unit 373 determines whether or not the cell A is included within the top two highest reception quality cells in the measurement report received by the pico base station 370 during a predetermined period (S203). Here, as an index of the reception quality, RSRP (Reference Signal Received Power), RSRQ (Reference Signal Received Quality) or the like may be used, for example.

If the determination in S203 turns out to be that the cell A is not included in the top two highest reception quality cells, the control unit 373 eliminates the cell A from the neighbor cell list 376 and then ends the process on the cell A (S205).

If the determination in S203 turns out to be that the cell A is included in the top two highest reception quality cells, the operation proceeds to a process shown as S204. The control unit 373 determines whether or not the CN-ID corresponding to the cell A is the same as the CN-ID of the core network to which the pico base station 370 is connected (S204). If the determination in S204 turns to be that the CN-ID corresponding to the cell A is the same as the CN-ID of the core network to which the pico base station 370 is connected, the control unit 373 ends the process without eliminating the cell A from the neighbor cell list 376.

If the determination in S204 turns to be that the CN-ID corresponding to the cell A is different from the CN-ID of the core network to which the pico base station 370 is connected, the control unit 373 eliminates the cell A from the neighbor cell list 376 (S205).

Here, any other reference may be adopted as a reference for the determination of whether or not to eliminate the cell A from the neighbor cell list 376. As such another reference, for example, it can be considered to determine the necessity or nonnecessity for eliminating the cell A not by whether or not the cell A is included within the top two highest reception quality cells but by whether or not it is included within an optional number of highest reception quality cells. The necessity or nonnecessity for the elimination may be determined also by whether or not the reception quality in the cell A is equal to or higher than a threshold value. In that case, the process may be such that it proceeds to S204 if the reception quality of the cell A is equal to or higher than the threshold value, and to S205 if the reception quality of the cell A is lower than the threshold value

In the above description, the control unit 373 determines, in S204, whether or not the CN-ID corresponding to the cell A is the same as the CN-ID of the core network to which the pico base station 370 is connected. However, as already mentioned before, the determination may be made in terms of the MME ID, the GUMMEI or the S-GW ID instead of the CN-ID.

Further in the above description, the cell A is eliminated, in S205, from the neighbor cell list if it does not satisfy the condition of S203 or that of S204, but any other operation may be performed there. For example, when the determination result in S202 indicates that handover to the cell A has occurred during the predetermined time period, a process of preferentially leaving (not eliminating) the cell A in the neighbor cell list 376 may be performed. More specifically, a way of such as raising the priority of the cell A may be considered. The process described just above may be performed also when the determination result in S204 indicates that the CN-ID corresponding to the cell A is the same as the CN-ID of the core network to which the pico base station 370 is connected.

### [Method of receiving neighbor cell list]

Next, a description will be given of a method of sending and receiving of a neighbor cell list performed between the base stations. Operation described below corresponds to S101 and S102 of the flow chart shown in Fig. 7.

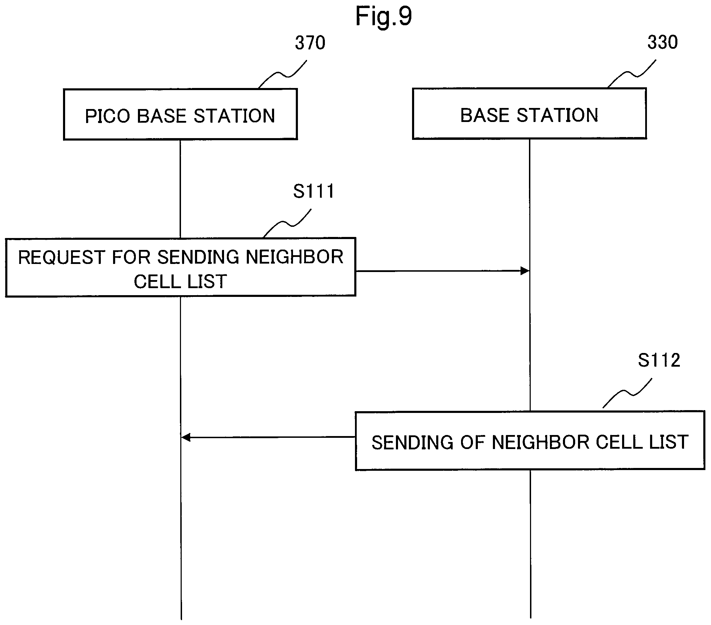

Fig. 9 shows a state of sending and receiving of a neighbor cell list performed between the pico base station 370 and the base station 330.

First, the pico base station 370 sends to the base station 330 which was selected in S101 a request for sending a neighbor cell list (Sill). A dedicated message may be used for this request for sending a neighbor cell list. Instead of a dedicated one, a message described in Non-patent Document 1 such as "X2 SETUP REQUEST" and "eNB CONFIGURATION UPDATE" may be used.

Next, on receiving the request for sending a neighbor cell list, the base station 330 sends a neighbor cell list to the pico base station 370 (S112). A dedicated message may be used for this sending of a neighbor cell list. Instead of a dedicated one, a message described in Non-patent Document 1 such as "X2 SETUP RESPONSE" and "eNB CONFIGURATION UPDATE" may be used.

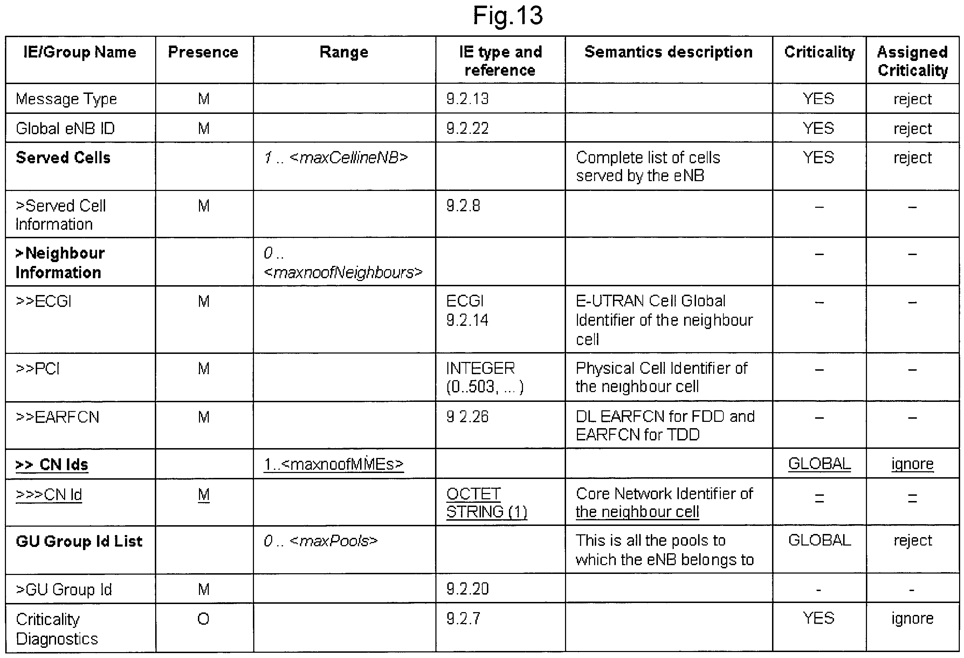

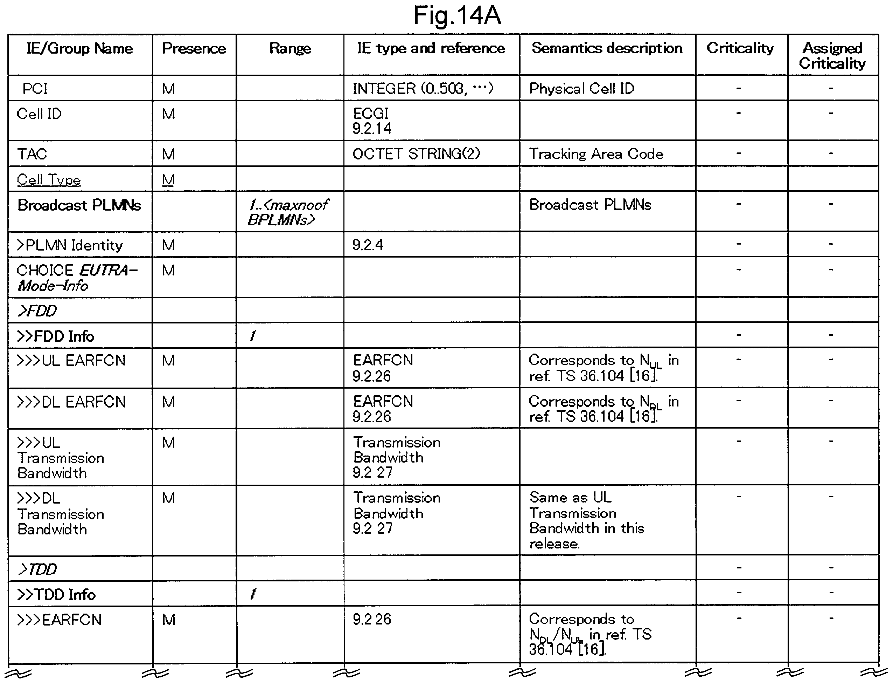

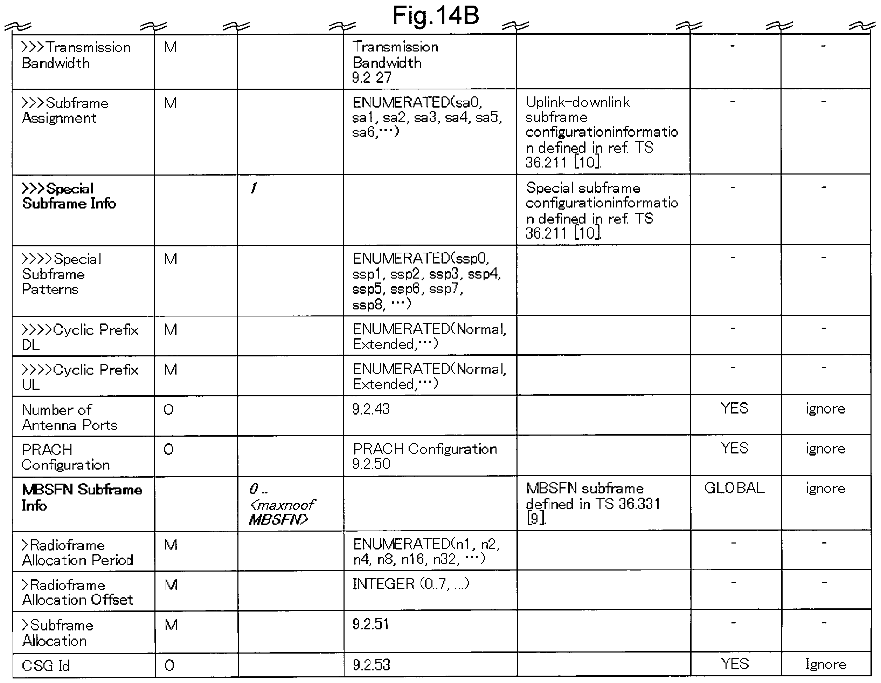

An example of information sent from the base station 330 to the pico base station 370 in S112 is shown in Fig. 13 and Fig. 14.

Fig. 13 is a diagram obtained by adding a "CN ID" to the information contained in "X2 SETUP RESPONSE" described in Non-patent Document 1. This CN ID is an identifier for identifying a core network to which the cell belongs, and the above-mentioned CN-ID, MME ID, GUMMEI, S-GW ID or the like may be used as the CN ID, for example.

In Fig. 13, the CN ID may be added in the form of a list. When a base station managing the cell is connected to a plurality of core networks, identifiers for identifying respective ones of the plurality of core networks are described in the form of a list in the column "Range" in Fig. 13. In Fig. 13, the value of CN Ids indicates that a list from 1 to "max no of MMEs", the maximum number of MME, is provided. Instead of the maximum number of MME, the maximum number of CN ID (maxnoofCNIDs), the maximum number of S-GW (maxnoofSGWs) or the like may be used for CN Ids.

Further, as information sent from the base station 330 to the pico base station 370, "eNB CONFIGURATION UPDATE" described in Non-patent Document 1 may be used. In that case, similarly to in Fig. 13, the CN-ID, MME ID, GUMMEI, S-GW ID or the like is added to "eNB CONFIGURATION UPDATE".

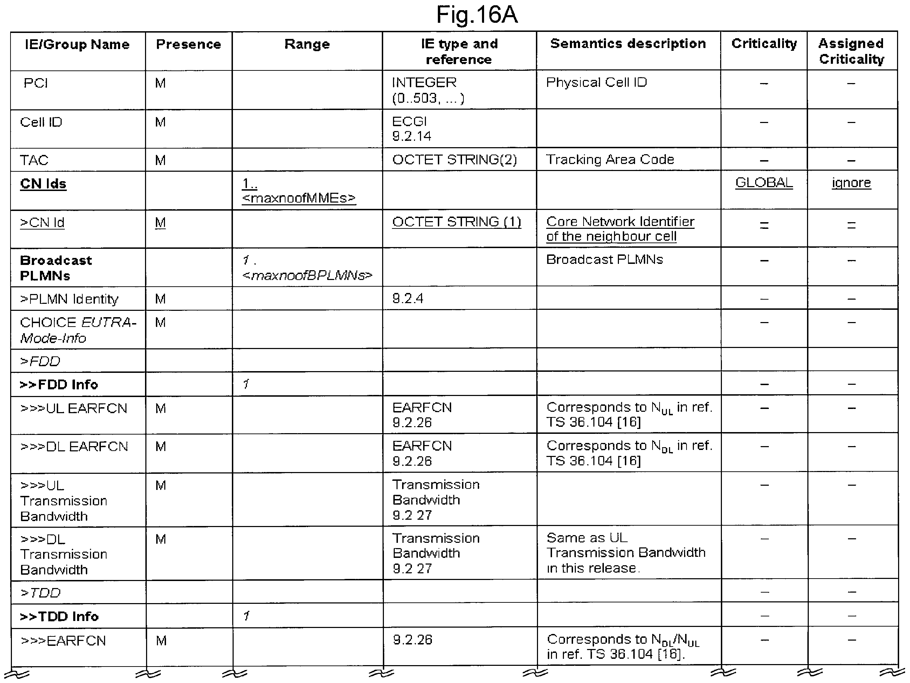

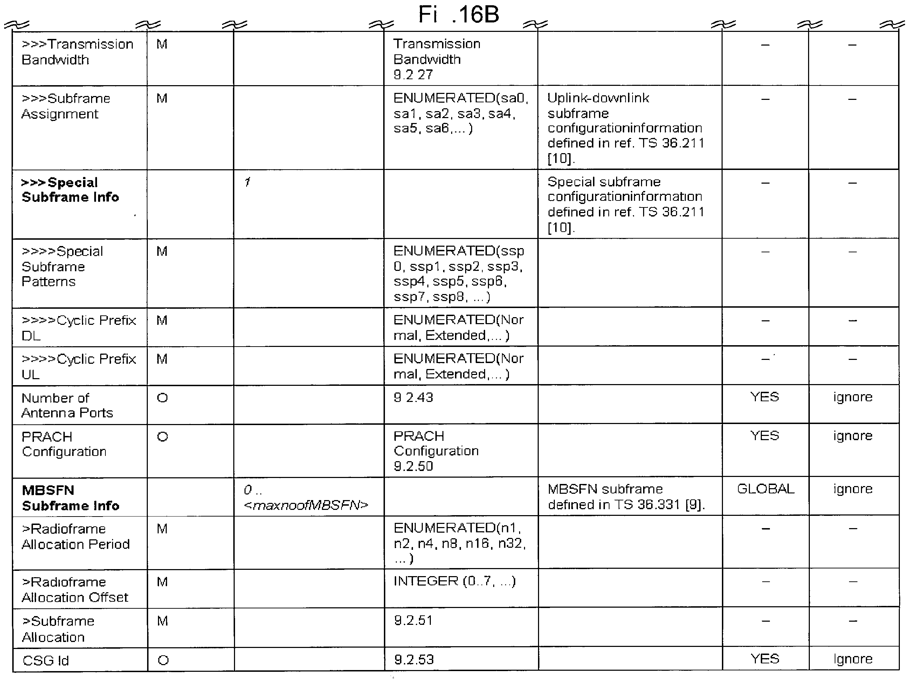

Fig. 14 is a diagram showing the details of "Served Cell Information" in Fig. 13. Here, while Fig. 14 is divided into two drawings Fig. 14A and Fig. 14B for the sake of convenience, Fig. 14A and Fig. 14B together show the above-mentioned details of information contained in "Served Cell Information". The following description will be given by referring to the combination of Fig. 14A and Fig. 14B as Fig. 14. Further, Fig. 16, Fig. 17, Fig. 19 and Fig. 20 described later will be similarly dealt with. The information shown in Fig. 14 is that obtained by adding "Cell Type" to the information contained in "Served Cell Information" described in Non-patent Document 1. This Cell Type is information expressing the size of the coverage area of the cell. If taking the network configuration of Fig. 3 as an example, information expressing that the coverage area is large is set in cases of the cells of the base stations 330 and 340. On the other hand, information expressing that the coverage area is small is set in cases of the cells of the pico base station 370 and the relay base station 350.

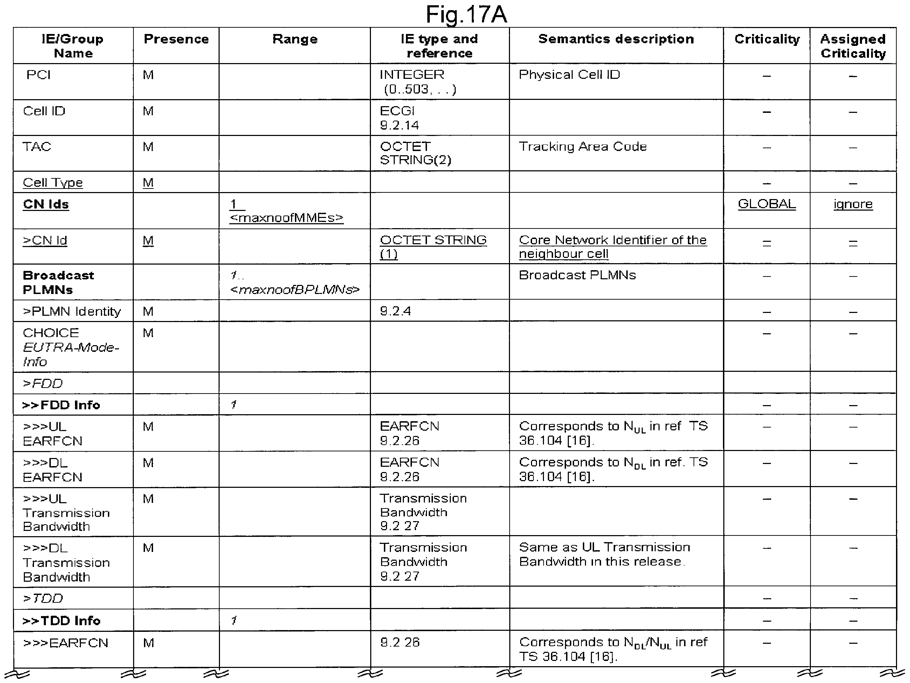

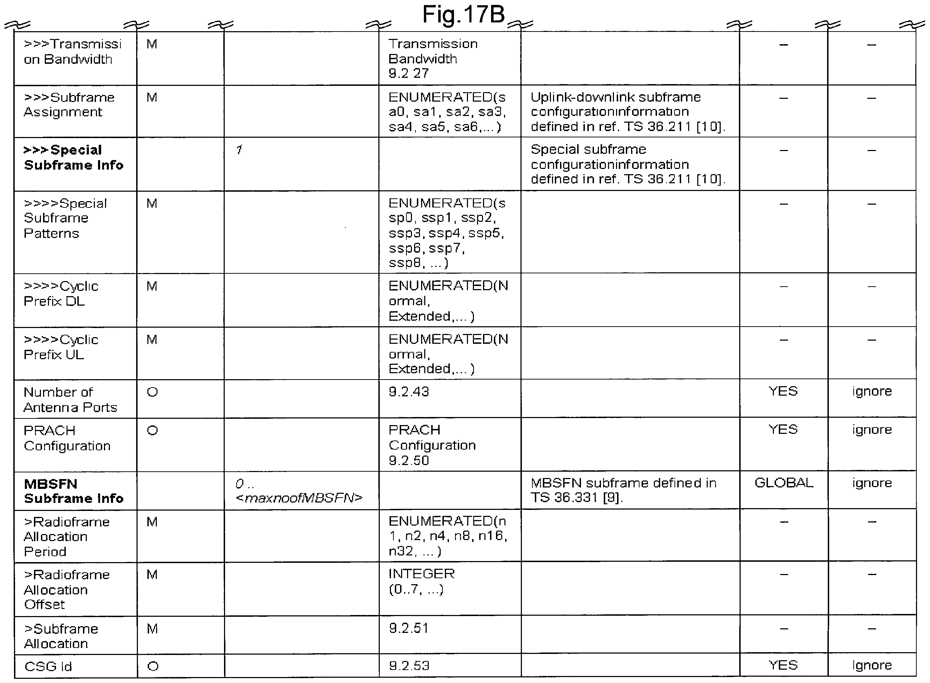

In "Served Cell Information" shown in Fig. 14, an identifier for identifying a core network such as the CN-ID, MME ID, GUMMEI, S-GW ID or the like may be used. Fig. 16A and Fig. 16B are diagrams showing an example of when the CN ID is added to the "Served Cell Information". As shown in Fig. 17A and Fig. 17B, the Cell Type and the CN ID may be added together to the "Served Cell Information".

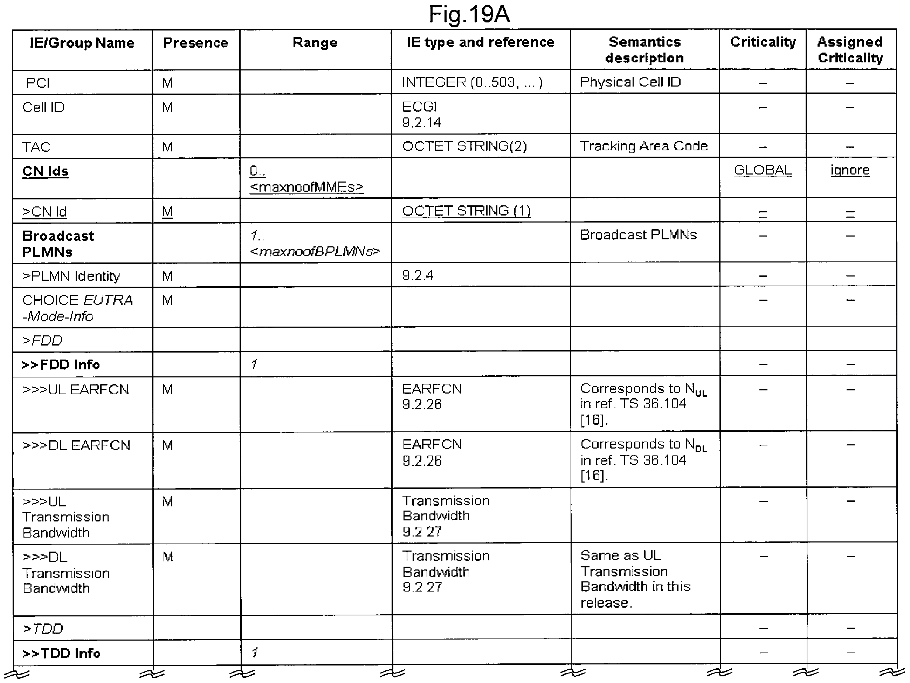

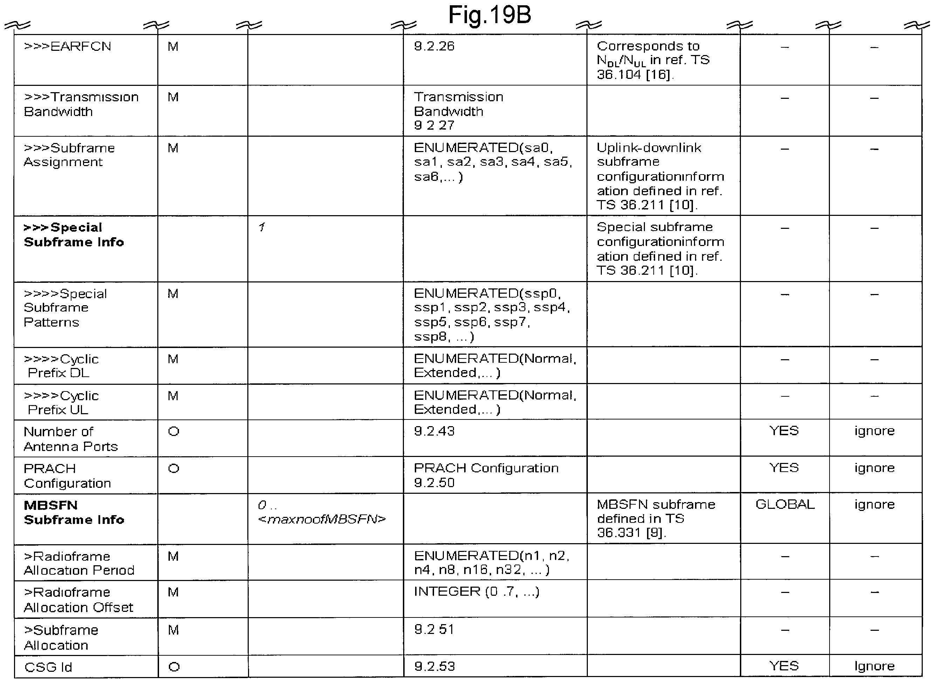

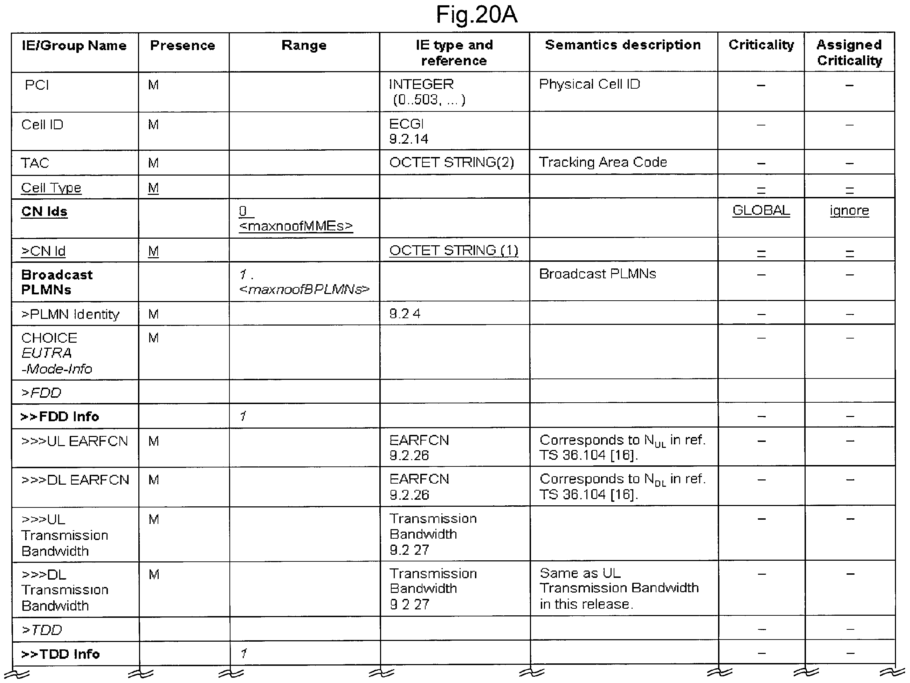

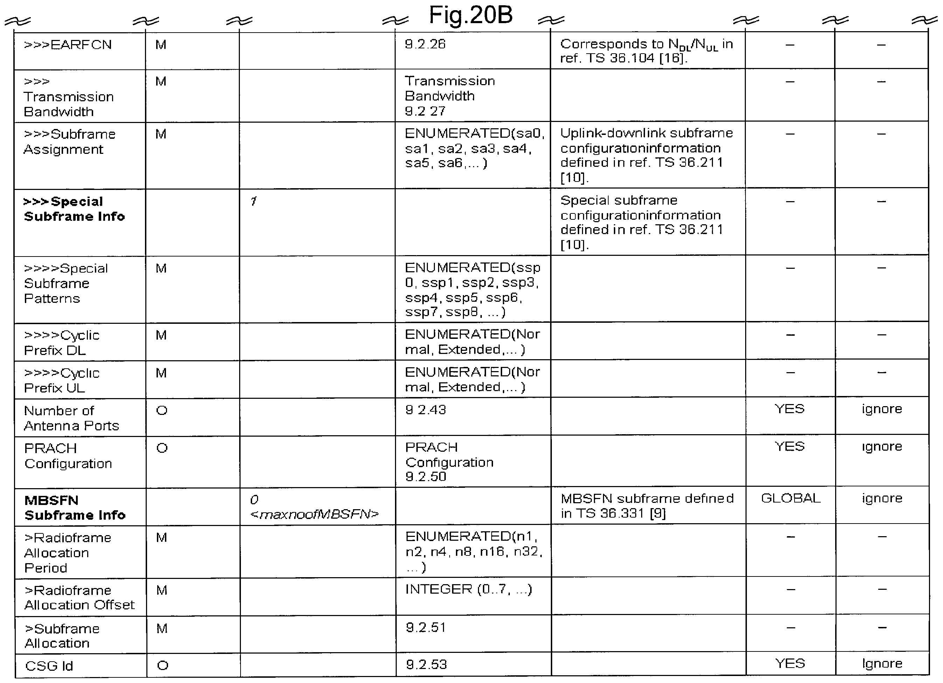

In the examples shown in Fig. 16 and Fig. 17, "Presence" of CN ID is set to be "M (Mandatory)", and accordingly the CN ID needs to be included in that case, but setting with no necessity for the CN ID may be made. Fig. 19A and Fig. 19B show an example of when the CN ID is set to be optional instead of "M" in the "Served Cell Information" of Fig. 16. Similarly, Fig. 20A and Fig. 20B show an example of when the CN ID is set to be optional instead of "M" in the "Served Cell Information" of Fig. 17.

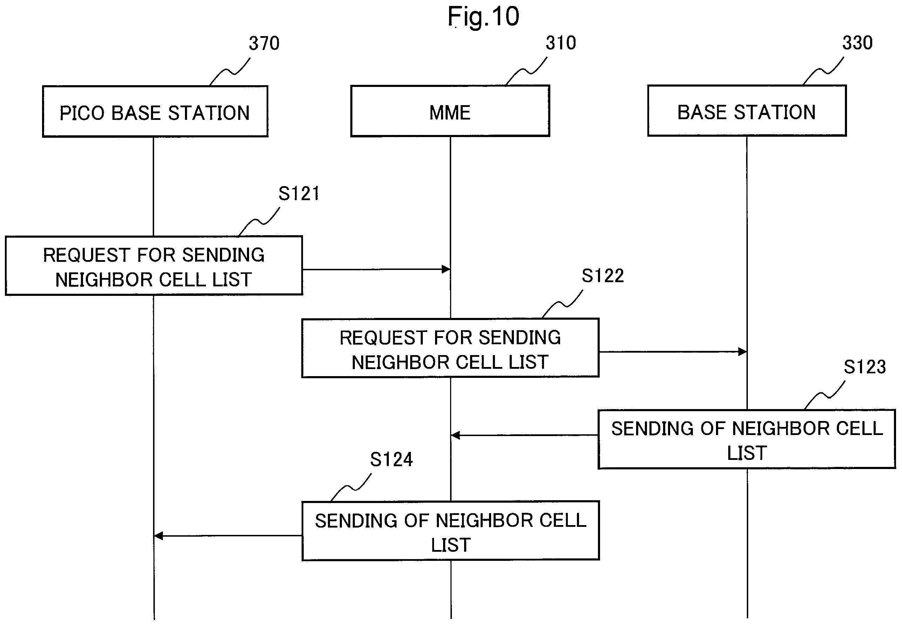

In Fig. 9, shown is an example where the pico base station 370 and the base station 330 perform sending and receiving of a neighbor cell list directly to and from each other. However, as shown in Fig. 10, the sending and receiving of a neighbor cell list may be performed via the MME 310 or the like. A process flow shown in Fig. 10 is almost the same as that shown in Fig. 9, but is different in that the MME 310 relays a request for sending a neighbor cell list in S122 and relays a neighbor cell list in S124.

Thus far, the description has been given of the configuration and operation of when the base station 330 sends a neighbor cell list in response to a request from the pico base station 370. However, it is also possible to adopt a configuration in which the base station 330 actively notifies another base station of a neighbor cell list with respect to the cell managed by the base station 330 without receiving a request from the pico base station 370.

For the sending of a neighbor cell list, either a dedicated message or a message described in Non-patent Document 1 such as "X2 SETUP REQUEST", "eNB CONFIGURATION UPDATE" or the like may be used.

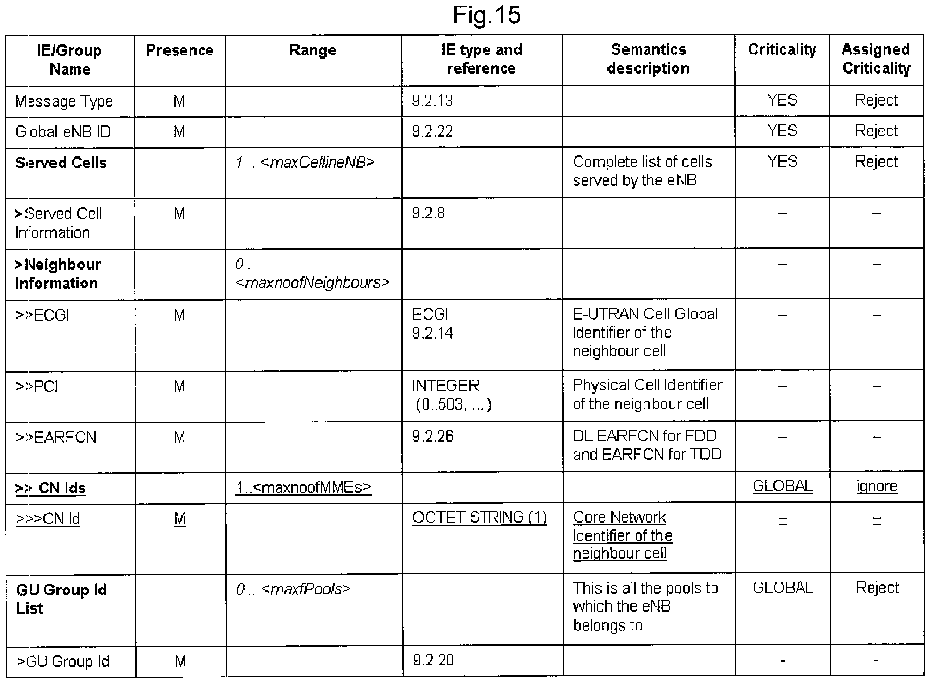

Fig. 15 is a diagram obtained by adding one of identifiers for identifying a core network, CN ID, to "X2 SETUP REQUEST" described in Non-patent Document 1. Besides the CN ID, the MME ID, GUMMEI, S-GW ID or the like may also be used as the identifier for identifying a core network. Also when "eNB CONFIGURATION UPDATE" is used, it is only necessary to add an identifier for identifying a core network such as the CN ID, similarly to in Fig. 15.

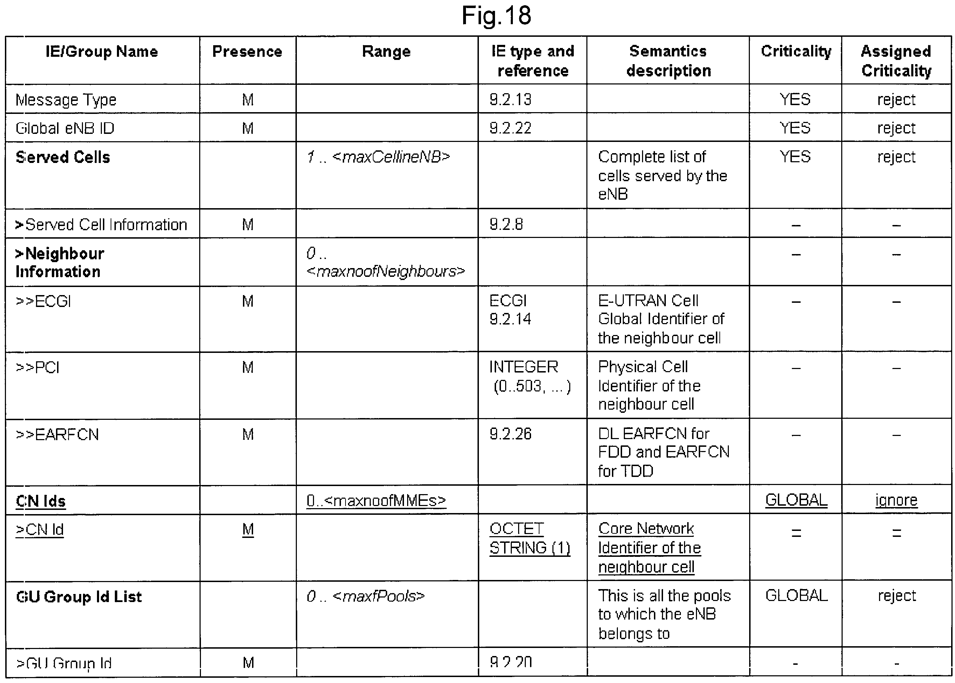

Similarly to in Fig. 19 and Fig. 20, the CN ID may be set to be optional instead of Mandatory also in "X2 SETUP REQUEST" and "eNB CONFIGURATION UPDATE". Fig. 18 is a diagram showing an example of when the CN ID is set to be optional instead of M in "X2 SETUP REQUEST" of Fig. 15. Also when "eNB CONFIGURATION UPDATE" is used, the CN ID may be set to be optional in the same way as in Fig. 18.

### [effect]

As has been described above, the base station according to the second exemplary embodiment uses a list held by a neighbor base station, as a neighbor cell list with respect to the cell managed by the own base station. The neighbor cell list stores an identifier (CN-ID) for identifying a core network to which each of the cells in the list belongs.

Accordingly, it becomes possible to recognize to which core network each of the cells described in the neighbor cell list belongs.

It thus becomes possible to preferentially leave in the neighbor cell list the cell of a base station connected to the same core network. As a result, it becomes possible to raise the possibility of handover of a mobile terminal to the cell of a base station connected to the same core network when the mobile terminal attempts to execute handover with reference to the neighbor cell list.

In general, when change of core network occurs during a handover process, the time necessary for such a handover process becomes longer than that necessary for handover within the same core network. Therefore, according to the second exemplary embodiment, it becomes possible to reduce the time necessary for a handover process of a mobile terminal because a cell belonging to the same core network can preferentially be left in the neighbor cell list.

### [third exemplary embodiment]

Next, a third exemplary embodiment will be described. In the third exemplary embodiment, a description will be given of S101 in the flow chart of Fig. 7, that is, a method of selecting a base station from which a neighbor cell list is to be received. The third exemplary embodiment may be implemented in proper combination with the first and the second exemplary embodiments. Here, the configuration of each base station is the same as that in the second exemplary embodiment, and accordingly its description will be omitted.

### [operation]

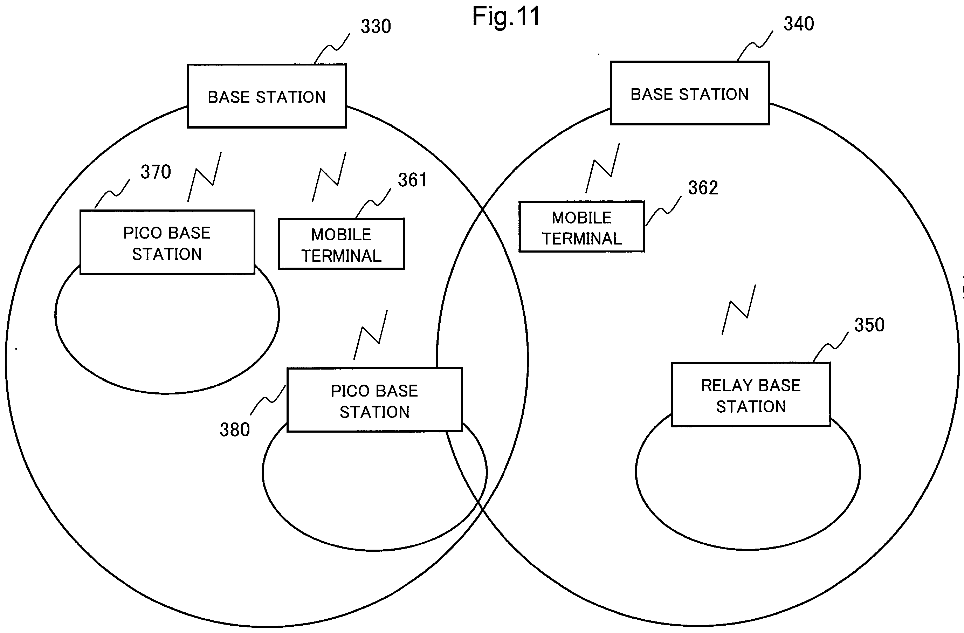

Fig. 11 is a diagram showing relationships of cells of the base station 330, the base station 340, the relay base station 350, the pico base station 370 and a pico base station 380 with the mobile terminals 361 and 362. Illustration of the MME 301 and the S-GW 302 is omitted there for the sake of simplicity. Although each of the base stations may comprise a plurality of cells, it is assumed in the example shown in Fig. 11 that each of them comprises only one cell.

In the example shown in Fig. 11, the mobile terminal 361 and the pico base stations 370 and 380 are contained in the cell of the base station 330. Similarly, the mobile terminal 362, the relay base station 350 and the pico base station 380 are contained in the cell of the base station 340.

As already described before, the coverage area of the relay base station 350 and that of the pico base stations 370 and 380 are all smaller than that of the base stations 330 and 340. Accordingly, the number of cells to be listed in a neighbor cell list held by those base stations necessarily becomes small.

In this respect, in the third exemplary embodiment, a base station having a smaller coverage area, such as a pico base station and a relay base station, receives a neighbor cell list from a base station having a larger coverage area and uses the received neighbor cell list as its own one.

For example, the pico base station 370 receives a neighbor cell list from the base station 330 having the cell containing the pico base station 370. Similarly, the relay base station 350 receives a neighbor cell list from the base station 340 having the cell containing the relay base station 350. The pico base station 380 contained in both the cell of the base station 330 and that of the base station 340 selects either of the base stations 330 and 340 as a base station from which a neighbor cell list is to be received, and then receives a neighbor cell list from thus selected base station.

Here, the method used by the pico base stations 370 and 380 for receiving a neighbor cell list from the base stations 330 and 340, respectively, is almost the same as that of Fig. 9 and Fig. 10 described in the second exemplary embodiment, and accordingly its description will be omitted.

However, when a base station having received a request for sending a neighbor cell list sends the neighbor cell list to a base station having sent the request, that is, for example, in S112 of Fig. 9, and in S123 and S124 of Fig. 10, information on the coverage area needs to be included in the sending.

### [Operation of pico base station]

Hereinafter, a description will be specifically given of operation of the pico base station 370 up to its receiving a neighbor cell list with respect to the cell it manages. The pico base station 380 performs the same operation, and accordingly its description will be omitted.

First, by cell planning, cells close to the pico base station 370 in distance are inputted, on the basis of geographical information or the like, as initial values of the neighbor cell list of the pico base station 370.

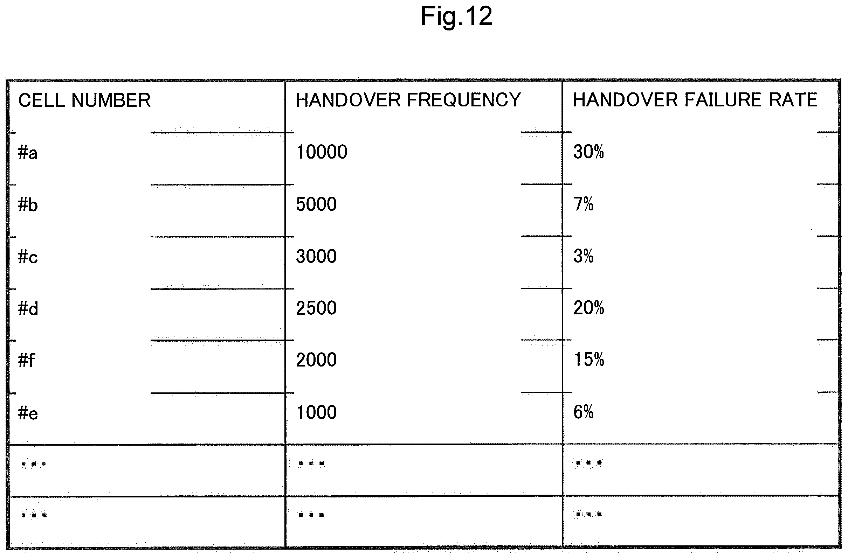

On each of the cells included in the initial neighbor cell list, the measurement unit 375 measures the handover frequency and the handover failure rate as statistical information. The statistical information measured by the measurement unit 375 is stored in a table such as shown in Fig. 12.

In Fig. 12, the handover frequency and handover failure rate for each of the neighbor cells are included as statistical information. In Fig. 12, the cells are listed in descending order of handover frequency. Other information such as the handover success rate may be used as the statistical information.

Next, referring to the table of Fig. 12, the selection unit 374 determines a cell containing, or overlapping most with, the cell held by the pico base station 370. For example, the pico base station 370 selects a cell with the highest handover frequency and also with a handover failure rate smaller than a threshold value. If assuming the threshold value of handover failure rate to be 10%, a cell to be selected by the pico base station 370 is the cell #b.

The selection unit 374 sends the base station 330 managing the selected cell #b a request for sending a neighbor cell list, via an X2 link or an S1 link.

The base station 330 sends the neighbor cell list with respect to the cell #b to the pico base station 370. At that time, the base station 330 sends also information expressing the size of its coverage area. This information may be an identifier specific to the base station or an identifier expressing the type of the base station, such as a pico base station and a relay base station.

Accordingly, when a cell with respect to which a request for sending a neighbor cell list received is the cell of a pico base station or a relay base station, the cell's having a small coverage area is to be notified at the time of sending a neighbor cell list.

In that case, the pico base station 370 having received a neighbor cell list may determine not to use the received neighbor cell list. It is because the number of cells neighboring to a cell having a small coverage area is small, and accordingly some neighbor cells to be listed may be missed in setting of a neighbor cell list at the pico base station 370.

If the pico base station 370 does not use a neighbor cell list with respect to the cell of the pico base station 380 or of the relay base station 350, the pico base station 370 performs the following operation. From among cells in a list of statistical information about neighbor cells of the cell managed by the pico base station 370, the pico base station 370 sends a request for sending a neighbor cell list sequentially in descending order of priority. The pico base station 370 repeats the operation until it receives a neighbor cell list from any cell other than both the pico base station 380 and the relay base station 350.

### [Operation of relay base station]

Next, operation of the relay base station 350 up to its receiving a neighbor cell list will be described specifically.

The relay base station 350 selects a DeNB connected to the relay base station 350. In the examples in Fig. 4 and Fig. 11, the base station 340 is selected.

The relay base station 350 requests the base station 340 to send a neighbor cell list, via a Un link. The wireless base station 340 sends a neighbor cell list to the relay base station 350.

The third exemplary embodiment has been described above, taking a pico base station and a relay base station as examples. However, the configurations and operations of the third exemplary embodiment may be applied also to a base station which is neither a pico base station nor a relay base station, for example, the base stations 330 and 340. For example, it is possible at the base station 330 to receive a neighbor cell list from the base station 340 and use the received neighbor cell list as a neighbor cell list with respect to the cell managed by the own base station. Similarly, the configurations and operations according to the third exemplary embodiment may be applied also to a femto base station whose coverage area is further smaller than that of a pico base station and of a relay base station.

### [Effect]

As has been described above, the base station according to the third exemplary embodiment uses a list held by a neighbor base station as a neighbor cell list with respect to the cell managed by the own base station, similarly to in the second exemplary embodiment. The neighbor cell list stores an identifier (CN-ID) for identifying a core network to which each of the cells belongs.

Accordingly, it becomes possible to recognize to which core network each of the cells described in the neighbor cell list belongs.

Consequently, it becomes possible to preferentially leave in the neighbor cell list the cell of a base station connected to the same core network. As a result, it becomes possible to raise the possibility of handover of a mobile terminal to the cell of a base station connected to the same core network when the mobile terminal attempts to perform handover with reference to the neighbor cell list.

In general, when change of core network occurs during a handover process, the time necessary for such a handover process becomes longer than that necessary for handover within the same core network. Therefore, according to the third exemplary embodiment, it becomes possible to reduce the time necessary for a handover process of a mobile terminal because a cell belonging to the same core network can preferentially be left in the neighbor cell list.

The present invention has been described above with reference to the exemplary embodiments, but it is not limited to the above-described exemplary embodiments. To the configurations and details of the present invention, various changes and modifications understandable to those who skilled in the art may be made within the scope of the present invention.

Further, with regard to the base station, pico base station and relay base station according to the above-mentioned exemplary embodiments, the functions they have may be implemented by hardware, and also by a computer and a program executed on the computer.

The program is provided in a manner to be recorded in a recording medium such as a magnetic disk and a semiconductor memory, and is read into the computer at a time of start-up or the like of the computer. Thus controlling operation of the computer, the computer is caused to function as the base station, pico base station and relay base station in each of the exemplary embodiments and is accordingly caused to execute the above-described processes.

This application is based upon and claims the benefit of priority from Japanese Patent Application No. 2012-006324, filed on January 16, 2012.

### [Reference Signs List]

301 MME
302 S-GW
303, 304, 1000 base station
305 relay base station
306 mobile terminal
307, 308 pico base station
1001 list
1002 reception means
1003 control means
3071 storage unit
3072 reception unit
3073 control unit
3074 selection unit
3075 measurement unit

## Claims

1. A base station comprising:
a storage means for storing a list of cells neighboring to a cell managed by the base station, the list correlating each of the neighbor cells with an identifier for identifying a core network the neighbor cell belongs to;
a reception means for receiving, from a base station neighboring to the base station, a list stored by the neighbor base station; and
a control means for using the received list as a list with respect to a cell managed by the base station,
wherein the identifier is one of a Mobility Management Entity, MME, ID, a Global Unique MME ID, GUMMEI, and a Serving Gateway, S-GW, ID.

2. The base station according to claim 1, wherein
the control means is adapted to optimize the received list and to use the optimized list as a list with respect to the cell managed by the base station.

3. The base station according to claims 1 or 2, wherein
the control means is adapted to perform list optimization by eliminating from the list a cell to which no handover has been executed during a predetermined time period, from among cells included in the list.

4. The base station according to any one of claims 1 to 3, wherein
the control means is adapted to eliminate from the list a cell included in the list, on the basis of the reception quality during a predetermined time period of the cells included in the list.

5. The base station according to claim 4, wherein
the control means is adapted to eliminate, from among the cells included in the list, a cell whose place in a ranking in terms of the reception quality is equal to or lower than a certain place.

6. The base station according to any one of claims 1 to 5, wherein
the control means is, referring to the identifiers, further adapted to eliminate from the list a cell belonging to a different core network from that of the cell managed by the base station, from among the cells included in the list.

7. The base station according to any one of claims 1 to 6, wherein
the control means is, referring to the identifiers, further adapted to perform the optimization to preferentially leave in the list a cell belonging to the same core network as that of the cell managed by the base station, from among the cells included in the list.

8. The base station according to any one of claims 1 to 7, wherein
the control means is, referring to the identifiers, further adapted to perform list optimization to raise the degree of priority, within the list, of a cell belonging to the same core network as that of the cell managed by the own base station, from among the cells included in the list.

9. The base station according to any one of claims 1 to 8, wherein
the control means is adapted to perform list optimization by eliminating a cell managed by the base station having sent the received list and a cell managed by the base station.

10. The base station according to any one of claims 1 to 9, the base station further comprising
selection means for selecting a base station from which the list is to be received.

11. The base station according to claim 10, wherein
the selection means is adapted to select a base station from which the list is to be received, on the basis of the handover frequency of cells and handover failure rate of cells managed by the neighbor base stations.

12. A communication system comprising a plurality of base stations, wherein
the base stations each comprise:
a storage means for storing a list of cells neighboring to a cell managed by the base station, the list correlating each of the neighbor cells with an identifier for identifying a core network the neighbor cell belongs to;
a reception means for receiving, from a base station neighboring to the base station, a list stored by the neighbor base station; and
a control means for using the received list as a list with respect to the cell managed by the base station,
wherein the identifier is one of a Mobility Management Entity, MME, ID, a Global Unique MME ID, GUMMEI, and a Serving Gateway, S-GW, ID.

13. A communication method performed by a base station comprising:
receiving a cell list stored by a neighbor base station, in which cells neighboring to a cell managed by the neighbor base station are each correlated with an identifier for identifying a core network the neighbor cell belongs to; and
using the received list as a list with respect to a cell managed by the base station,
wherein the identifier is one of a Mobility Management Entity, MME, ID, a Global Unique MME ID, GUMMEI, and a Serving Gateway, S-GW, ID.

14. A recording medium storing a program for causing a computer comprised in a base station to execute:
a process of receiving a cell list stored by a neighbor base station, in which cells neighboring to a cell managed by the neighbor base station are each correlated with an identifier for identifying a core network the neighbor cell belongs to; and
a process of using the received list as a list with respect to a cell managed by the base station,
wherein the identifier is one of a Mobility Management Entity, MME, ID, a Global Unique MME ID, GUMMEI, and a Serving Gateway, S-GW, ID.

## Patentansprüche

1. Basisstation, aufweisend:
eine Speichereinrichtung zum Speichern einer Liste von Zellen, die zu einer von der Basisstation verwalteten Zelle benachbart sind, wobei die Liste jede der Nachbarzellen mit einem Identifikator korreliert, um ein Kernnetzwerk, dem die Nachbarzelle angehört, zu identifizieren;
eine Empfangseinrichtung, um aus einer Basisstation, die zu der Basisstation benachbart ist, eine von der Basisstation gespeicherte Liste zu empfangen; und
eine Steuereinrichtung zum Verwenden der empfangenen Liste als eine Liste mit Bezug auf eine von der Basisstation verwaltete Zelle,
wobei der Identifikator ein Mobility Management Entity, MME, ID oder ein Global Unique MME ID, GUMMEI, oder ein Serving Gateway, S-GW, ID ist.

2. Basisstation nach Anspruch 1, wobei die Steuereinrichtung konfiguriert ist, die empfangene Liste zu optimieren und die optimierte Liste als eine Liste mit Bezug auf die von der Basisstation verwaltete Zelle zu verwenden.

3. Basisstation nach Anspruch 1 oder 2, wobei die Steuereinrichtung konfiguriert ist, eine Listenoptimierung durchzuführen, dadurch, dass aus der Liste eine Zelle gestrichen wird, zu der während einer vorgegebenen Zeitdauer kein Handover stattgefunden hat, unter den in der Liste enthaltenen Zellen.

4. Basisstation nach einem der Ansprüche 1 bis 3, wobei die Steuereinrichtung konfiguriert ist, aus der Liste eine in der Liste enthaltene Zelle zu streichen auf Basis der Empfangsqualität der in der Liste enthaltenen Zellen während einer vorgegebenen Zeitdauer.

5. Basisstation nach Anspruch 4, wobei die Steuereinrichtung konfiguriert ist, unter den in der Liste enthaltenen Zellen eine Zelle zu streichen, deren Stelle in einer Rangordnung in Bezug auf Empfangsqualität gleich oder niedriger als eine gewisse Stelle ist.

6. Basisstation nach einem der Ansprüche 1 bis 5, wobei die Steuereinrichtung, was die Identifikatoren betrifft, ferner konfiguriert ist, aus der Liste eine Zelle zu streichen, die einem anderen Kernnetzwerk angehört als die Zelle, die von der Basisstation verwaltet wird, unter den in der Liste enthaltenen Zellen.

7. Basisstation nach einem der Ansprüche 1 bis 6, wobei die Steuereinrichtung, was die Identifikatoren betrifft, ferner konfiguriert ist, die Optimierung durchzuführen, um vorzugsweise in der Liste eine Zelle zu belassen, die dem gleichen Kernnetzwerk angehört wie die Zelle, die von der Basisstation verwaltet wird, unter den in der Liste enthaltenen Zellen.

8. Basisstation nach einem der Ansprüche 1 bis 7, wobei die Steuereinrichtung, was die Identifikatoren betrifft, ferner konfiguriert ist, eine Listenoptimierung durchzuführen, um in der Liste den Prioritätsgrad einer Zelle, die dem gleichen Kernnetzwerk angehört wie die Zelle, die von der eigenen Basisstation verwaltet wird, zu erhöhen, unter den in der Liste enthaltenen Zellen.

9. Basisstation nach einem der Ansprüche 1 bis 8, wobei die Steuereinrichtung konfiguriert ist, eine Listenoptimierung durchzuführen durch Streichen einer Zelle, die von der Basisstation verwaltet wird, die die empfangene Liste gesendet hat, und einer Zelle, die von der Basisstation verwaltet wird.

10. Basisstation nach einem der Ansprüche 1 bis 9, wobei die Basisstation ferner eine Auswahleinrichtung zum Auswählen einer Basisstation, aus welcher die Liste empfangen werden soll, aufweist.

11. Basisstation nach Anspruch 10, wobei die Auswahleinrichtung konfiguriert ist, auf Basis der Handover-Frequenz von Zellen und einer Handover-Fehlerrate von Zellen, die von den Nachbarbasisstationen verwaltet werden, eine Basisstation, aus welcher die Liste empfangen werden soll, auszuwählen.

12. Kommunikationssystem aufweisend mehrere Basisstationen, wobei jede Basisstation aufweist:
eine Speichereinrichtung zum Speichern einer Liste von Zellen, die zu einer von der Basisstation verwalteten Zelle benachbart sind, wobei die Liste jede der Nachbarzellen mit einem Identifikator korreliert, um ein Kernnetzwerk, dem die Nachbarzelle angehört, zu identifizieren;
eine Empfangseinrichtung, um aus einer Basisstation, die zu der Basisstation benachbart ist, eine von der Basisstation gespeicherte Liste zu empfangen; und
eine Steuereinrichtung zum Verwenden der empfangenen Liste als eine Liste mit Bezug auf die von der Basisstation verwaltete Zelle,
wobei der Identifikator ein Mobility Management Entity, MME, ID oder ein Global Unique MME ID, GUMMEI, oder ein Serving Gateway, S-GW, ID ist.

13. Von einer Basisstation durchgeführtes Kommunikationsverfahren, aufweisend:
Empfangen einer in einer Nachbarbasisstation gespeicherten Zellliste, in welcher Zellen, die zu einer von der Nachbarbasisstation verwalteten Zelle benachbart sind, jeweils mit einem Identifikator zum Identifizieren eines Kernnetzwerks, dem die Nachbarzelle angehört, korreliert sind; und
Verwenden der empfangenen Liste als eine Liste mit Bezug auf eine von der Basisstation verwaltete Zelle,
wobei der Identifikator ein Mobility Management Entity, MME, ID oder ein Global Unique MME ID, GUMMEI, oder ein Serving Gateway, S-GW, ID ist.

14. Speichermedium, das ein Programm speichert, das einen in einer Basisstation angeordneten Computer veranlasst, auszuführen:
einen Prozess zum Empfangen einer in einer Nachbarbasisstation gespeicherten Zellliste, in welcher Zellen, die zu einer von der Nachbarbasisstation verwalteten Zelle benachbart sind, jeweils mit einem Identifikator zum Identifizieren eines Kernnetzwerks, dem die Nachbarzelle angehört, korreliert sind; und
einen Prozess zum Verwenden der empfangenen Liste als eine Liste mit Bezug auf eine von der Basisstation verwaltete Zelle,
wobei der Identifikator ein Mobility Management Entity, MME, ID oder ein Global Unique MME ID, GUMMEI, oder ein Serving Gateway, S-GW, ID ist.

## Revendications

1. Station de base comprenant :
un moyen de stockage pour stocker une liste de cellules voisines d'une cellule gérée par la station de base, la liste corrélant chacune des cellules voisines à un identifiant pour identifier un réseau central auquel appartient la cellule voisine ;
un moyen de réception pour recevoir, en provenance d'une station de base voisine de la station de base, une liste stockée par la station de base voisine ; et
un moyen de commande pour utiliser la liste reçue en tant que liste par rapport à une cellule gérée par la station de base,
dans laquelle l'identifiant est l'un parmi un identifiant d'entité de gestion de mobilité, MME, un identifiant de MME unique mondial, GUMMEI, et un identifiant de passerelle de desserte, S-GW.

2. Station de base selon la revendication 1, dans laquelle
le moyen de commande est adapté pour optimiser la liste reçue et pour utiliser la liste optimisée en tant que liste par rapport à la cellule gérée par la station de base.

3. Station de base selon les revendications 1 ou 2, dans laquelle
le moyen de commande est adapté pour réaliser une optimisation de liste en éliminant de la liste une cellule à laquelle aucun transfert n'a été exécuté pendant une période de temps prédéterminée, parmi des cellules incluses dans la liste.

4. Station de base selon l'une quelconque des revendications 1 à 3, dans laquelle
le moyen de commande est adapté pour éliminer de la liste une cellule incluse dans la liste, sur la base de la qualité de réception pendant une période de temps prédéterminée des cellules incluses dans la liste.

5. Station de base selon la revendication 4, dans laquelle
le moyen de commande est adapté pour éliminer, parmi les cellules incluses dans la liste, une cellule dont la place dans un classement en termes de qualité de réception est égale ou inférieure à une certaine place.

6. Station de base selon l'une quelconque des revendications 1 à 5, dans laquelle
le moyen de commande, en se référant aux identifiants, est en outre adapté pour éliminer de la liste une cellule appartenant à un réseau central différent de celui de la cellule gérée par la station de base, parmi les cellules incluses dans la liste.

7. Station de base selon l'une quelconque des revendications 1 à 6, dans laquelle
le moyen de commande, en se référant aux identifiants, est en outre adapté pour réaliser l'optimisation afin de laisser préférentiellement dans la liste une cellule appartenant au même réseau central que celui de la cellule gérée par la station de base, parmi les cellules incluses dans la liste.

8. Station de base selon l'une quelconque des revendications 1 à 7, dans laquelle
le moyen de commande, en se référant aux identifiants, est en outre adapté pour réaliser une optimisation de liste pour relever le degré de priorité, au sein de la liste, d'une cellule appartenant au même réseau central que celui de la cellule gérée par la propre station de base, parmi les cellules incluses dans la liste.

9. Station de base selon l'une quelconque des revendications 1 à 8, dans laquelle
le moyen de commande est adapté pour réaliser une optimisation de liste en éliminant une cellule gérée par la station de base ayant envoyé la liste reçue et une cellule gérée par la station de base.

10. Station de base selon l'une quelconque des revendications 1 à 9, la station de base comprenant en outre
un moyen de sélection pour sélectionner une station de base en provenance de laquelle la liste doit être reçue.

11. Station de base selon la revendication 10, dans laquelle
le moyen de sélection est adapté pour sélectionner une station de base en provenance de laquelle la liste doit être reçue, sur la base de la fréquence de transfert de cellules et d'un taux d'échec de transfert de cellules gérées par les stations de base voisines.

12. Système de communication comprenant une pluralité de stations de base, dans lequel
les stations de base comprennent chacune :
un moyen de stockage pour stocker une liste de cellules voisines d'une cellule gérée par la station de base, la liste corrélant chacune des cellules voisines à un identifiant pour identifier un réseau central auquel appartient la cellule voisine ;
un moyen de réception pour recevoir, en provenance d'une station de base voisine de la station de base, une liste stockée par la station de base voisine ; et
un moyen de commande pour utiliser la liste reçue en tant que liste par rapport à une cellule gérée par la station de base,
dans laquelle l'identifiant est l'un parmi un identifiant d'entité de gestion de mobilité, MME, un identifiant de MME unique mondial, GUMMEI, et un identifiant de passerelle de desserte, S-GW.

13. Procédé de communication réalisé par une station de base, comprenant :
la réception d'une liste de cellules stockée par une station de base voisine, dans laquelle des cellules voisines d'une cellule gérée par la station de base voisine sont chacune corrélées à un identifiant pour identifier un réseau central auquel appartient la cellule voisine ; et
l'utilisation de la liste reçue en tant que liste par rapport à une cellule gérée par la station de base,
dans lequel l'identifiant est l'un parmi un identifiant d'entité de gestion de mobilité, MME, un identifiant de MME unique mondial, GUMMEI, et un identifiant de passerelle de desserte, S-GW.

14. Support d'enregistrement stockant un programme pour amener un ordinateur compris dans une station de base à exécuter :
un processus de réception d'une liste de cellules stockée par une station de base voisine, dans laquelle des cellules voisines d'une cellule gérée par la station de base voisine sont chacune corrélées à un identifiant pour identifier un réseau central auquel appartient la cellule voisine ; et
un processus d'utilisation de la liste reçue en tant que liste par rapport à une cellule gérée par la station de base,
dans lequel l'identifiant est l'un parmi un identifiant d'entité de gestion de mobilité, MME, un identifiant de MME unique mondial, GUMMEI, et un identifiant de passerelle de desserte, S-GW.
